# EUROPEAN PATENT APPLICATION

(11) **EP 3 430 958 A1**
(43) Date of publication of application: **23.01.2019**
(21) Application number: 18184061.2
(22) Date of filing: 17.07.2018
(51) Int. Cl.: A47J 43/25, B26D 7/00

(54) **PORTABLE ELECTRIC ROTARY SLICER**

(30) Priority: 19.07.2017 US 201715653843
(71) Applicant: Daka Research Inc., Road Town, Tortola (VG)
(72) Inventor: CHOW, Jesse Emery, Tortola (VG)
(74) Representative: FRKelly

(57) **Abstract**

A portable electric rotary slicer (100), which may have a handle (102), a blade holder (104) configured to hold a blade assembly (110), and a pusher (106). The blade assembly (110) couples to the blade holder (104) by a ring gear (708) configured to fit concentrically around the blade assembly (110), allowing the rotary slicer (100) to be operated at a high torque with relatively little electrical power being supplied. The rotary slicer (100) may have a stand (118), a safety cylinder (112) disposed around the blade assembly (110) and configured to protect the user's fingers when pushing material into the blade assembly (110), and a divider (804) disposed within the safety cylinder (112). To operate the device, a user may insert a blade assembly (110) into the blade holder (104), place material directly above the blade assembly (110) and under the pusher (106), activate the switch of the rotary slicer, and press downward with the pusher (106) to force the material into the spinning blade of the blade assembly (110).

## Description

### BACKGROUND

It is common, when preparing food, to seek to improve the flavor of a given dish by grating cheese, chocolate, nuts, spices, or other toppings into a form that allows them to be spread on top of the food. Depending on the food item, this may be done at any time from an initial preparation stage to just before eating. This may typically be done through the use of a culinary grater.

It is also common, when preparing food, to seek to prepare toppings by thinly slicing food, rather than grating it. For example, certain types of food, such as salads, may be prepared by slicing, julienning, or spiral slicing one or more toppings.

The simplest form of grater is a manually-operated one. These graters usually make use of a stiff metal plate with holes formed therein. Each of these holes typically has a raised edge or portion of an edge which can function as a scraping blade; these edges are usually stamped out of the holes during the formation process. A person can drag a food item, such as a block of cheese, across the holes of the stiff metal plate, repeatedly passing the food item over the scraping blades and sending small fragments of the food item through the holes. The manual grater typically has some form of handle to facilitate this process.

Likewise, the simplest form of slicing tool is a kitchen knife. A person can slice food items at an appropriate level of thickness by manually positioning the kitchen knife at an appropriate interval and then moving it through the food.

However, manual graters and knives are often time-inefficient and unsuitable for preparing a large volume of grated or sliced material. As such, a number of electric graters or slicers have been created to make the process of grating or slicing food more time-efficient and more suitable for higher volumes of food.

Such graters or slicers, such as the CASO MULTI GRATER or the GRANDMA ANN'S ELECTRIC GRATER, are most commonly large and bulky devices that must be operated on a counter. This lack of portability somewhat limits their utility; for example, diners are not able to effectively use such electric graters in order to add grated spices to flavor food to their liking, unless they go to the kitchen in order to use the countertop electric grater. This also means that such graters or slicers cannot be used on the go; for example, a picnicker or beachgoer who wishes to prepare and eat food on the go has no ability to use a typical electric grater or slicer to prepare fresh toppings for their food when they do so.

Some number of portable electric graters or slicers do exist. However, these likewise suffer from shortcomings. For example, most portable graters or slicers, such as the PRESTO PROFESSIONAL SALADSHOOTER and the CUISINART CORDLESS RECHARGEABLE MULTI-GRATER, are still fairly large and bulky, making them somewhat difficult to handle, particularly for those with smaller hands. Portable graters or spiral slicers also tend to operate by applying a torque to a food item in order to grate it or slice it in a spiral pattern, which again makes the portable graters and slicers tough to handle. Portable graters or slicers also tend to be operated partially manually, specifically by the user pressing on a "pressing board" in order to feed one or more food items into the grater or slicer; if this pressing board is not operated with care, the user may hurt their hand, for example by accidentally feeding their hand into the grater or slicer, or by clamping their hand under the pressing board. It can also often be difficult to feed food into the grater or slicer, which may require some degree of preparation from the user; for example, if there is a narrow-diameter chute leading into the grater or slicer, the user may have to pre-slice large foodstuffs before feeding them into the grater or slicer. Portable graters or slicers also often make use of rechargeable battery packs to provide enough power to run the portable grater or slicer; these can be expensive, and require a user to spend time charging the battery packs in order to operate the portable grater or slicer, which limits spontaneity on the part of the user.

### SUMMARY

An electrically-operated grater or slicer may be disclosed, and may be used to grate or otherwise prepare foodstuffs. According to an exemplary embodiment, the electrically-operated grater or slicer may have a gearbox that allows the grater or slicer to operate at a high level of torque while only using low-power batteries (such as AA batteries) for power, which may allow the grater or slicer to be small, light, and portable while still capable of grating or slicing most foodstuffs. In some exemplary embodiments, the slicer may be configured to slice foodstuffs in a spiral pattern, or may be configured to grate or slice foodstuffs in any other pattern, such as may be desired.

According to an exemplary embodiment, a portable electric rotary slicer may include a handle, which may have a handle housing, the handle housing having a battery cover coupled to and detachable from the housing and a switch cover disposed in the housing. The handle may further include a power source.

In an exemplary embodiment, the electrically-operated grater or slicer may have a relatively low power requirement, such that a large rechargeable battery pack is not necessary and such that the specially-designed gear box of the grater or slicer can be run with sufficient torque and speed using, for example, conventional alkaline batteries. In an exemplary embodiment, a power source may be at least one battery (such as an alkaline or rechargeable battery) accessible from the battery cover. In an exemplary embodiment, a power source may be a DC adapter, and the handle may further include a plug adapted to be coupled to a DC adapter; in an embodiment, such a plug may be electrically connected to the same circuit as at least one battery so that either at least one battery or a DC adapter may be used, as desired. The handle may further have a switch disposed under the switch cover.

The handle may further have a motor assembly, which may have a motor coupled to a gear base having a plurality of gear posts, the plurality of gear posts having an output gear and a plurality of reduction gears mounted thereon. The motor may have a spur gear mounted on the motor shaft, which may be operatively linked in a gear train to the plurality of reduction gears; the plurality of reduction gears may in turn be operatively linked in a gear train to the output gear. The output gear may then directly drive a blade holder, for example by interfacing with a ring gear of the blade holder that is coupled to a blade held within the blade holder.

The handle may further have a peg portion coupled to the top of the handle housing, the peg portion having a semicircular rear portion and a flat front portion, the flat front portion having a hole disposed therein, the output gear extending partially through the hole such that a plurality of teeth of the output gear extend from the hole and such that a majority of the output gear is held within the peg portion, the output gear being rotatable within the hole. A blade holder may be mounted on top of the peg portion, as desired. The peg portion of the handle may be, for example, a twist-and-lock connector, such that a user may place a blade holder on top of the twist-and-lock connector, press down on the blade holder while turning it, and thereby lock the twist-and-lock connector in place.

The rotary slicer may further have a blade holder, which may have a blade holder hole extending through the blade holder, and may have a top blade holder plate and a bottom blade holder plate, the bottom blade holder plate having a channel extending around the perimeter of the blade holder hole, the bottom blade holder plate further having a peg hole disposed on a lower side of the bottom blade holder plate. The peg hole may be connected to the channel by an opening, such that, when the blade holder is placed on the peg, the output gear in the peg extends into the blade holder from the peg.

The blade holder may further include a ring gear, which may be disposed within the channel of the bottom blade holder plate such that the ring gear is concentric with the blade holder hole. The ring gear may be positioned so that one or more teeth of the ring gear are disposed within the opening, such that they can interface with the output gear in the peg.

The blade holder may further have a top rim portion disposed around a top rim of the blade holder hole and a bottom rim portion disposed around a bottom rim of the blade holder hole. The top rim portion may have a top rim connector.

The blade holder may hold a blade assembly, which may have a blade carriage and a blade disposed horizontally within the blade carriage, the blade carriage being sized to fit within the blade holder hole and adapted to be coupled to the ring gear by a ring gear connector.

The rotary slicer may further have a pusher, which may have a pusher handle and a pushing surface.

### BRIEF DESCRIPTION OF THE FIGURES

Advantages of embodiments of the present invention will be apparent from the following detailed description of the exemplary embodiments thereof, which description should be considered in conjunction with the accompanying drawings in which like numerals indicate like elements, in which:
FIG. 1A is an exemplary embodiment of a portable electric rotary slicer.
FIG. 1B is an exemplary embodiment of a portable electric rotary slicer.
FIG. 1C is an exemplary embodiment of a portable electric rotary slicer.
FIG. 1D is an exemplary embodiment of a portable electric rotary slicer.
FIG. 2 is an exemplary embodiment of a portable electric rotary slicer.
FIG. 3 is an exemplary embodiment of a portable electric rotary slicer blade set.
FIG. 4A is an exemplary embodiment of a portable electric rotary slicer handle assembly, shown in an exploded view.
FIG. 4B is an exemplary circuit diagram of a portable electric rotary slicer power source and motor.
FIG. 5A is an exemplary embodiment of a portable electric rotary slicer motor assembly, shown in an exploded view.
FIG. 5B is an exemplary embodiment of a portable electric rotary slicer motor gearbox.
FIG. 5C is an exemplary embodiment of a portable electric rotary slicer motor gearbox.
FIG. 5D is an exemplary embodiment of a plurality of gears in the portable electric rotary slicer motor gearbox.
FIG. 5E is an exemplary embodiment of a plurality of gears in the portable electric rotary slicer motor gearbox.
FIG. 5F is an exemplary embodiment of a plurality of gears in the portable electric rotary slicer motor gearbox.
FIG. 6 is an exemplary embodiment of a portable electric rotary slicer stand.
FIG. 7A is an exemplary embodiment of a portable electric rotary slicer blade holder assembly, shown in an exploded view.
FIG. 7B is an exemplary embodiment of a plurality of gears in the portable electric rotary slicer, at the interface between the blade holder and the handle.
FIG. 8 is an exemplary embodiment of a portable electric rotary slicer safety cylinder and divider assembly.
FIG. 9A is an exemplary embodiment of a portable electric rotary slicer blade assembly, shown in an exploded view.
FIG. 9B is an exemplary embodiment of a portable electric rotary slicer blade assembly, shown in an exploded view.
FIG. 9C is an exemplary embodiment of a portable electric rotary slicer blade assembly, shown in an exploded view.
FIG. 9D is an exemplary embodiment of a portable electric rotary slicer blade assembly, shown in an exploded view.
FIG. 10 is an exemplary embodiment of a portable electric rotary slicer shown in use.
FIG. 11 is a flowchart showing an exemplary embodiment of a method of operating a portable electric rotary slicer.

### DETAILED DESCRIPTION

Aspects of the invention are disclosed in the following description and related drawings directed to specific embodiments of the invention. Alternate embodiments may be devised without departing from the spirit or the scope of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments. Moreover, the terms "embodiments of the invention", "embodiments" or "invention" do not require that all embodiments of the invention include the discussed feature, advantage or mode of operation.

According to an exemplary embodiment, and referring generally to the Figures, various exemplary implementations of an electrically-operated grater or slicer may be disclosed. Each implementation may function to grate foodstuffs, slice foodstuffs, or both, which may depend on what blade is used in the electrically-operated grater or slicer. As such, in the exemplary disclosure, the terms "grater" and "slicer" may be somewhat interchangeable; a configuration operable to grate food may in many exemplary embodiments also be used to slice food, and vice-versa.

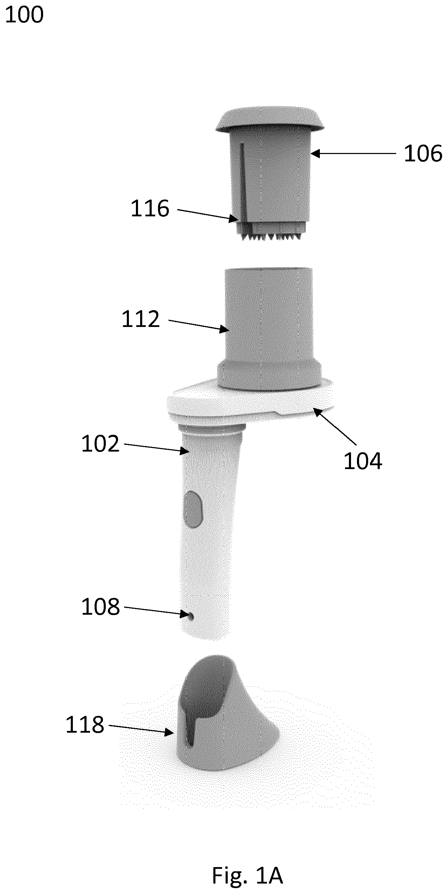

Turning now to exemplary Figure 1A, Figure 1A displays an exemplary embodiment of a portable electric rotary slicer 100. According to an exemplary embodiment, a portable electric rotary slicer 100 may have a handle 102, a blade holder 104, and a pusher 106. In an exemplary embodiment, the rotary slicer 100 may be arranged such that the blade holder 104 extends outward in a cantilevered fashion from the top of the handle 102. The blade holder 104 may have an opening in which the pusher 106 may be held when not in use. Other arrangements may be understood, as may be desired.

In some exemplary embodiments, the rotary slicer 100 may also have a stand 118, may have a plug connection 108 or other power source, and may further have a safety cylinder 112 and an extended pushing surface 116 on the pusher 106 that is suitable for pushing material through the safety cylinder 112.

In an exemplary embodiment, a user may operate the rotary slicer 100 by activating a power switch, which may be housed on the handle 102, for example on a body of the handle or on an underside of the handle 102. In some exemplary embodiments, the user may toggle the switch between an "on" state and an "off' state, such that the user may press the switch to start the rotary slicer 100 and may press the switch to stop the rotary slicer 100. In another exemplary embodiment, a user may hold down the switch to operate it, ensuring that the device may be quickly powered off (for example, if the user manages to accidentally contact the blade with one of their fingers and recoils in pain, they may release the switch and turn off the device).

In an exemplary embodiment, the rotary slicer 100 may have a plug connection 108 disposed on the handle 102, which may allow the plug connector of an electrical wire (such as a plug connector of a DC adapter) to be coupled to the rotary slicer 100. In other exemplary embodiments, a stand of the rotary slicer 100 may function as a base station, such that the rotary slicer 100 may be provided with DC power (for example, by electrical contacts, magnetic induction, or through another method, such as may be desired) by placing it in the stand rather than by plugging in a plug connector. In other exemplary embodiments, an electrical wire may be permanently coupled to the rotary slicer 100, for example if it is desired to provide a non-portable embodiment; in such an embodiment, a DC adapter may be housed within the handle 102 of the rotary slicer 100, if desired.

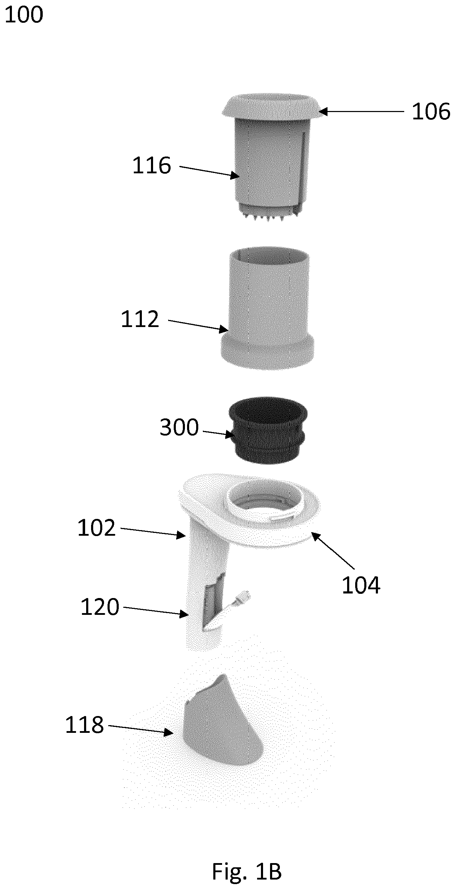

Turning next to exemplary Figure 1B, Figure 1B displays an exemplary embodiment of a portable electric rotary slicer 100. According to some exemplary embodiments, a rotary slicer 100 may be battery-powered, such as by a plurality of batteries protected by a battery cover 120, or may be powered by an electrical wire. According to some exemplary embodiments, when the rotary slicer 100 is battery-powered, the rotary slicer 100 may be powered by batteries (such as alkaline or rechargeable batteries) and may also be connectable to a wall outlet, such as via a DC adapter; this may in some exemplary embodiments allow rechargeable batteries used in the rotary slicer 100 to automatically be recharged via the wall outlet when the rotary slicer 100 is not in use, and may allow the rotary slicer 100 to be used either as a portable or plug-in device such as may be desired.

In an exemplary embodiment, a portable electric rotary slicer 100 may also support a portable electric rotary slicer blade assembly 110, which may be disposed in the blade holder 104 of the portable electric rotary slicer 100. In an exemplary embodiment, a blade assembly 110 may be housed within a blade holder 104. In an exemplary embodiment, the blade assembly 110 may be oriented along a vertical axis, such that foodstuffs or other items may be fed into the blade assembly 110 from the top side of the blade assembly 110, sliced by the blade assembly 110, and fed out of the bottom side of the blade assembly 110; these sliced foodstuffs may be dispensed out of the bottom side of the blade assembly 110, which may for example allow these sliced foodstuffs to be placed on food to be seasoned. The blade assembly 110 may be removably coupled to the blade holder 104, such that angular motion can be imparted to the blade assembly 110 from the blade holder 104, causing the blade assembly 110 to turn within the blade holder 104.

For example, according to an exemplary embodiment, the blade holder 104 may have a ring gear disposed around the perimeter of a hole in which the blade assembly 110 may be disposed. The ring gear may be coupled to the blade assembly 110 when the blade assembly 110 is disposed in this hole, which may, for example, be done by a tab-and-slot connection or plurality of tab-and-slot connections (for example, in an exemplary embodiment, the ring gear may have internal gear teeth and the outside of the blade assembly may have matching gear teeth, allowing a gear mesh between the inside of the ring gear and the outside of the blade assembly 110) or by any other connection such as may be desired. In an exemplary embodiment, the use of such a ring gear may improve the strength and performance of the rotary slicer 100 when slicing.

In another exemplary embodiment, the blade assembly 110 may be coupled to the blade holder 104 or may be given angular motion by the blade holder 104 through some other mechanism. For example, in some exemplary embodiments, it may be desirable to use a planetary gear set within a ring gear, with each of the planetary gears coupled to one of a plurality of blades of the blade assembly 110, in order to facilitate the use of multiple blades in the blade assembly 110. In other exemplary embodiments, it may be desirable to use another gear rather than a ring gear on the blade holder 104. For example, according to an exemplary embodiment, a spur gear or helical gear may protrude outward from one part of a hole in the blade holder 104, and may interface with external gear teeth on the blade assembly 110; for example, according to an exemplary embodiment wherein a spur gear is used, the blade assembly 110 may have gear teeth around its circumference, whereas according to an exemplary embodiment wherein a helical gear is used, the blade assembly 110 may have gear teeth around its upper rim. Other methods of transferring angular momentum other than a gear mesh may also be considered, as may be desired.

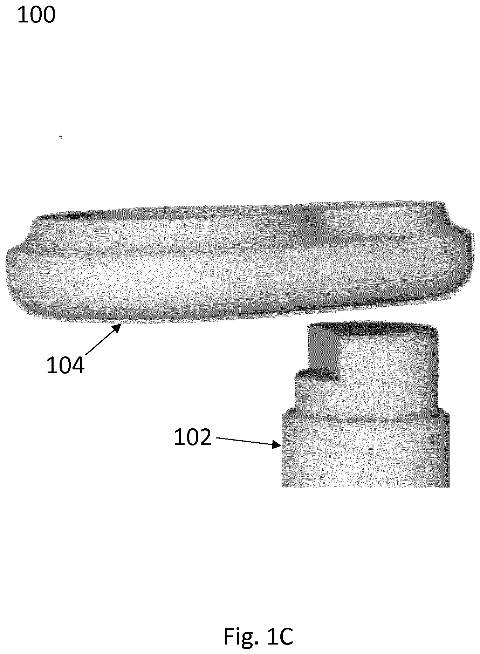

Turning next to exemplary Figure 1C, Figure 1C displays an exemplary embodiment of a portable electric rotary slicer 100. According to exemplary Figure 1C, the handle 102 and the blade holder 104 may be removed from one another, which may be done in Figure 1C so as to show each component more clearly. In particular, according to an exemplary embodiment, the ease with which the blade holder 104 can be removed from and reattached to the handle 102 may be made possible by a specially-designed gearbox disposed in the handle 102.

According to an exemplary embodiment, a portable electric rotary slicer 100 may be designed to be easy to disassemble. This may, for example, facilitate easy storage of the portable electric rotary slicer 100, as the portable electric rotary slicer 100 may, when not in use, be disassembled into multiple components and stowed easily in a drawer. In some exemplary embodiments, this may also facilitate cleaning of the portable electric rotary slicer 100. For example, it may be desirable to remove the components from one another in order to properly clean the interfaces between the components; for example, a user may be able to clean an interface between a blade holder 104 and a handle 102 far more easily by removing the blade holder 104 from the handle 102. In another example, in some exemplary embodiments, one or more of the components of the portable electric rotary slicer 100 may be dishwasher-safe while others may not be dishwasher-safe, and the one or more components that may be dishwasher-safe (such as, for example, the blade holder 104, the pusher 106, or some or all blade assemblies) may be removed, run through a dishwasher, and reconnected to the remainder of the portable electric rotary slicer 100, as may be desired.

According to an exemplary embodiment, a handle 102 may be coupled to a blade holder 104 by a peg-in-hole connection. For example, according to an exemplary embodiment, a handle 102 may have a peg disposed on the upper portion of the handle 102, and the blade holder may have an equivalent hole disposed on the underside of, or extending all of the way through, the blade holder 104. In some exemplary embodiments, the peg of the handle 102 may have a flattened portion that may mirror an equivalent flattened portion on the hole of the blade holder 104. The peg of the handle 102 may be inserted into the hole of the blade holder 104, such that the flattened portion of the peg of the handle 102 and the flattened portion of the hole of the blade holder 104 are aligned, which may lock the blade holder 104 in place on the handle 102 and prevent side-to-side motion from the blade holder 104 relative to the handle 102. This may serve to keep the blade holder 104 in place when the blade holder 104 is subject to a torque, while still allowing the rotary slicer 100 to be easily disassembled, for cleaning or storage.

In some exemplary embodiments, the flattened portion of the peg of the handle 102 may have an opening in which one or more gears is disposed. The blade holder 104 then may be placed on the peg of the handle 102 in such a manner as to allow the exposed gear of the handle 102 to contact a gear of the blade holder 104, transmitting angular momentum provided by the exposed gear of the handle 102 to the gear of the blade holder 104 and ultimately to a blade held by the blade holder 104.

According to an exemplary embodiment, a pusher 106 may have a generally flared shape with a flattened bottom portion. In another exemplary embodiment, the bottom portion of the pusher 106 may have one or more spikes or sharper portions in order to provide better grip. In an exemplary embodiment, the flared shape of the pusher 106 may prevent the pusher 106 from being inserted too far into the blades of the blade holder 104. Pusher 106 may also have a handle portion allowing the handle to be gripped by a user. In an exemplary embodiment, the handle portion of the pusher 106 may be, for example, a concave channel running around the perimeter of the pusher 106, which may be easily gripped by a user; in another exemplary embodiment, another handle or gripping mechanism may be used for the pusher 106, such as a plurality of finger-holes on the top of the pusher 106 that a user may insert their fingers into.

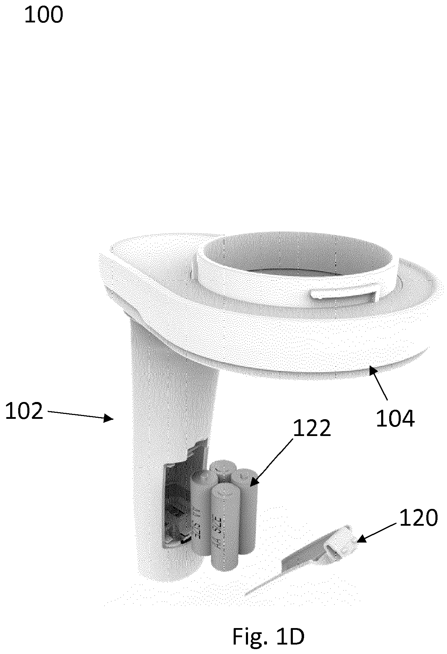

Turning now to exemplary Figure 1D, Figure 1D may show an exemplary embodiment of a portable electric rotary slicer 100, having an open battery cover 120. According to an exemplary embodiment, a portable electric rotary slicer 100 may be configured to take standard batteries 122, such as AA batteries.

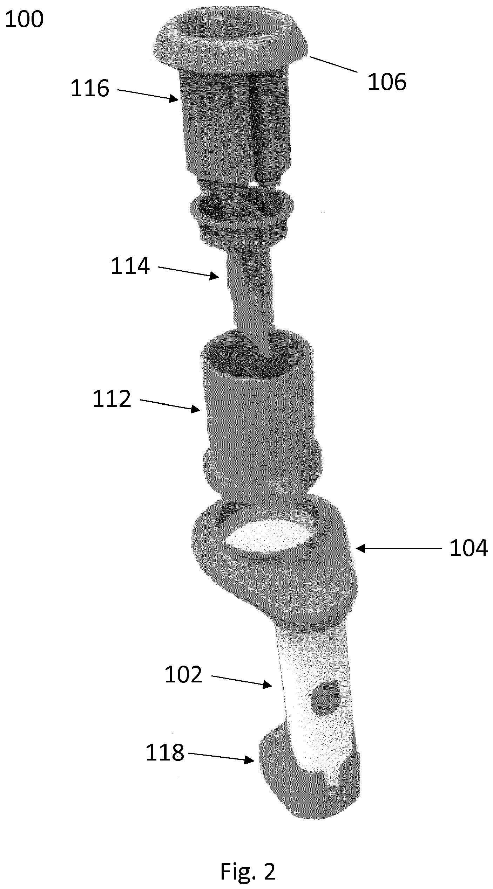

Turning now to exemplary Figure 2, Figure 2 may show an exemplary embodiment of a portable electric rotary slicer 100. In the exemplary embodiment shown in Figure 2, the portable electric rotary slicer 100 may further have a stand 118, and may further have a safety cylinder 112 and divider 114.

According to an exemplary embodiment, a rotary slicer 100 may have a stand 118, which may in some embodiments be a detachable stand 118 and may in some embodiments be an integral stand 118. In an exemplary embodiment, the use of a detachable stand 118 may allow the rotary slicer 100 to function as both a fixed slicer (i.e. a countertop slicer) and a portable slicer (i.e. a handheld slicer) depending on the instant needs of the user. The stand 118 may be flattened on the bottom or may have grips disposed on the bottom, or may otherwise be shaped to rest on a surface, as may be desired. In some exemplary embodiments, the stand 118 may be sized in order to support the rotary slicer 100 standing on its own even while in operation, and may, for example, be very wide at the bottom. In other exemplary embodiments, the stand 118 may be sized in order to keep the rotary slicer 100 oriented in an upright direction when being held by the handle 102, and may be narrower at the bottom. In some exemplary embodiments, multiple sizes of stand 118 may be provided; for example, in an exemplary embodiment, a larger "base station" stand 118 capable of fixedly holding the rotary slicer 100 in an upright direction even when not being held, and a smaller "portable" stand 118 capable of keeping the rotary slicer 100 in an upright direction when being held by the handle 102 may each be provided, and may be swapped between as desired.

According to an exemplary embodiment, a rotary slicer 100 may have a safety cylinder 112, divider 114, or both. For example, in an exemplary embodiment, a user may be able to use the safety cylinder 112 without installing the divider 114, or may be able to use a divider 114 (such as a smaller divider 114) without installing the safety cylinder 112, if desired. In an exemplary embodiment, a pusher 106 may also be provided with an extended pushing surface 116 in order to push material through the safety cylinder 112. In some exemplary embodiments, each of the safety cylinder 112, the divider 114, and the pusher 106 may have a generally circular or round shape; in other exemplary embodiments, one or more of the safety cylinder 112, divider 114, and pusher 106 may have a different shape. (For example, according to an exemplary embodiment, the safety cylinder 112, a guide end of the divider 114 configured to fit snugly within the safety cylinder 112, and a pusher 106 may each have a hexagonal or octagonal cross-section.)

According to an exemplary embodiment, a safety cylinder 112 may be a hollow cylinder that may be coupled to the upper face of a blade holder 104, such that the hollow cylinder funnels down into the blade assembly 110 or into a hole for a blade assembly 110. According to an exemplary embodiment, the safety cylinder 112 may be flared, may be approximately straight over its length, or may have any other shape, such as may be desired.

According to an exemplary embodiment, a safety cylinder 112 may be coupled to the blade holder 104 by, for example, a threaded coupling to a threaded rim disposed around the hole for the blade assembly 110, a twist-and-lock coupling to a threaded rim disposed around the hole for the blade assembly 110, a threaded or twist-and-lock coupling that may fit in a recessed portion around the hole for the blade assembly 110, or any other type of connection, such as may be desired. According to an exemplary embodiment, a safety cylinder 112 may be removable in order to facilitate cleaning; according to another exemplary embodiment, the safety cylinder 112 may be fixed or may be integral with the blade holder 104 or with another component, such as may be desired.

According to an exemplary embodiment, a divider 114 may include one or more panels configured to fit within the safety cylinder 112, which may divide the safety cylinder 112 into two or more different passages. This may, for example, allow multiple types of foodstuff to be fed into a rotary slicer 100 and kept separate until slicing, at which point they may be combined; this may allow a user to keep track of the volume of each type of foodstuff that is housed within the rotary cylinder, allowing a user to replace foodstuffs as they are depleted. For example, according to an exemplary embodiment, a user may wish to slice or grind chocolate chips and two different types of nuts in a rotary slicer 100, all simultaneously. An exemplary divider may divide the safety cylinder into three passages for foodstuffs, and the user may fill each one of the passages with one of the types of foodstuffs to be ground, such that they can then grind the foodstuffs.

In an exemplary embodiment, a divider 114 may be formed integrally with a safety cylinder 112, such that the safety cylinder 112 has two or more passages into which foodstuffs can be loaded. In another exemplary embodiment, a divider 114 may be a panel that is removable from or insertable into a safety cylinder 112, which may be held in place by guides on the inner wall of the safety cylinder 112 or may be disposed within one or more slots of the safety cylinder 112.

In another exemplary embodiment, the divider 114 may include an upper guide portion that is configured to fit snugly within the safety cylinder 112 over most of its length and which is wider than the safety cylinder 112 at an upper end; this may allow the divider 114 to be easily inserted into the safety cylinder 112 without requiring guides or slots to be formed in the inner portion of the safety cylinder 112, may allow multiple different dividers 114 (for example, dividers 114 having three or more different passages) to be used so long as a universal guide portion is used between each of the dividers 114, and may allow the dividers 114 to be easily removed for cleaning or when a divider 114 is not desired. In an exemplary embodiment, the upper guide portion may include one or more holes that correspond to each passageway that is to be formed in the safety cylinder 112 by the divider 114. For example, looking at the exemplary embodiment of Figure 2, two different holes are present in the upper guide portion of the divider 114.

According to an exemplary embodiment in which a safety cylinder 112 is used, a pusher 106 may be provided with an extended pushing surface 116 having approximately the same length as the safety cylinder 112. In an exemplary embodiment, the extended pushing surface 116 of the pusher 106 may have an outer diameter slightly smaller than the inner diameter of the safety cylinder 112, such that the extending pushing surface 116 of the pusher 106 can be easily inserted into or removed from the safety cylinder 112. In some exemplary embodiments, the bottom surface of the extended pushing surface 116 may be flat or may, for example, have a number of protrusions that may be used to better grip a foodstuff to be pushed by the pusher 106, such as may be desired.

In an exemplary embodiment, a pusher 106 may have a top end that is wider than the mouth of the safety cylinder 112. This may ensure that the pusher 106 cannot be inserted too far into the safety cylinder 112. For example, it may be undesirable for the extended pushing surface 116 of the pusher to contact the blades of the blade assembly 110, and as such the length of the extended pushing surface 116 may be approximately the height of the safety cylinder 112 or slightly less than the height of the safety cylinder 112.

According to an exemplary embodiment in which a divider 114 is used, the extended pushing surface 116 may have a plurality of sections, each of which is configured to fit into one of the passages created by the divider 114. For example, according to the exemplary embodiment shown in Figure 2, the divider 114 may separate the safety cylinder 112 into two different passages, and as such the extended pushing surface 116 may have two different sections, separated by a slot having approximately the same width as the divider panel. This may allow the extended pushing surface 116 of Figure 2 to be inserted such that a left-hand-side section of the extended pushing surface 116 fits into the left-hand-side passage created by the divider 114, and such that the right-hand-side section of the extended pushing surface 116 fits into the right-hand-side passage created by the divider 114.

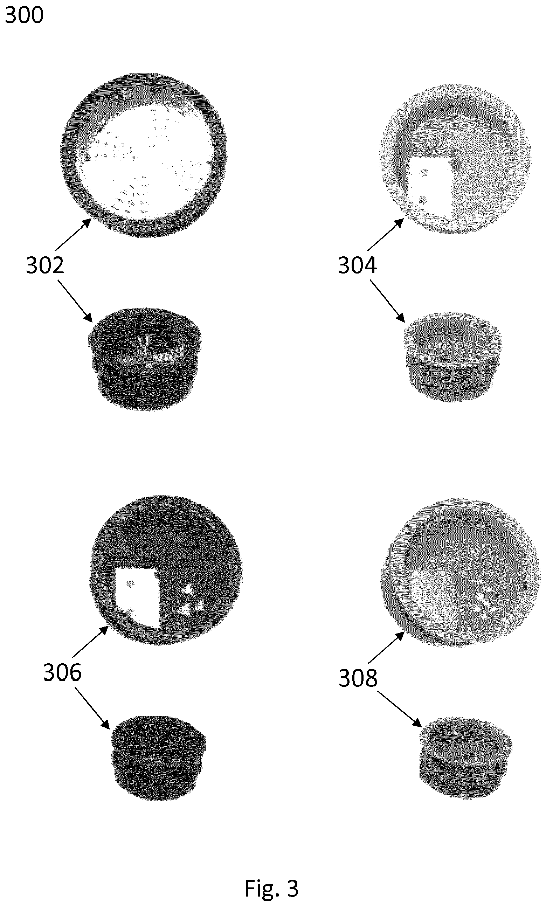

Turning now to exemplary Figure 3, Figure 3 displays an exemplary embodiment of a portable electric rotary slicer blade set 300. According to an exemplary embodiment, a rotary slicer may be provided with one or more blades which may be placed within a blade holder. According to an exemplary embodiment, multiple blades may be provided, and a user of the rotary slicer may be able to swap out one blade for another blade when desired. For example, according to an exemplary embodiment, a first blade may be a grinder or crusher blade, and may have a plurality of protrusions extended therefrom, which may function to grind, crush, or otherwise break up a foodstuff that is provided to the blade. A second blade, on the other hand, may be a slicer or scraper blade, and may have a plurality of holes having raised edges, each of which may function to slice or scrape a foodstuff that is provided to the blade. A third blade may be a combination of the two.

Figure 3 shows one specific exemplary blade set 300; however, in other embodiments, more or fewer blades, or different blades, may be provided such as is desired. According to an exemplary embodiment, the blades in the blade set may include a grater or scraper blade 302 having a large number of holes having raised edges disposed around the surface of the blade, which may serve to, when used, scrape away at the surface of a foodstuff and expel the pieces as small bits, similarly to a conventional grater.

The blades in the blade set may further include a slicer blade 304, which may have a razor blade disposed between the center and the edge of the blade assembly. This razor blade may, when spun, slice at the surface of an article fed into the rotary slicer from one side of the blade assembly, such as, for example, a vegetable. In some exemplary embodiments, this may slice away the surface of the article in a continuous spiral pattern, which may be dispensed out of the other side of a blade holder of the rotary slicer.

The blades in the blade set may further include grinding blades 306, 308. In an exemplary embodiment, each of these grinding blades may have a plurality of protrusions on their surface, such as triangular or pyramidal protrusions, that may be pressed against the surface of an article fed into the rotary slicer from one side of the blade assembly and which may function to abrade the surface when spun against it. Such protrusions may be as tall or short as may be desired; in some embodiments, a taller protrusion may be desirable in order to grind an article more rapidly, while on other embodiments a smaller protrusion may be desirable in order to grind an article more finely. In some exemplary embodiments, grinding blades 306, 308 may be combined one or more other blade designs; for example, according to an exemplary embodiment, a grinding blade 306, 308 may be combined with a razor blade such as was used in the slicer blade 304.

According to an exemplary embodiment, a blade assembly may be interchangeable with another blade assembly in order to allow a user to swap to using a different blade. However, according to an exemplary embodiment, the individual blades of a blade assembly may be interchangeable within a blade carriage (that is, the part of the blade assembly that holds the blade) such that a greater diversity of blades can be used or such that the number of blade assemblies that are provided to the user may be decreased.

According to an exemplary embodiment, the blades disclosed in Figure 3 may each feature a design that may prevent or restrict liquid from entering into the housing of the blade holder or handle, and may protect the gears of the rotary slicer from coming into contact with liquid. According to an exemplary embodiment, this may facilitate the use of gears constructed from a material that can be corroded by liquid, such as metal, if desired, which may allow the gears to be subject to higher levels of torque without risk of damage, if this is should be necessary or desired. This may eliminate the need for sealing elements, such as rubber O-rings disposed around a gear element or other such sealing elements, which can be expensive, easily damaged, or can obstruct moving parts.

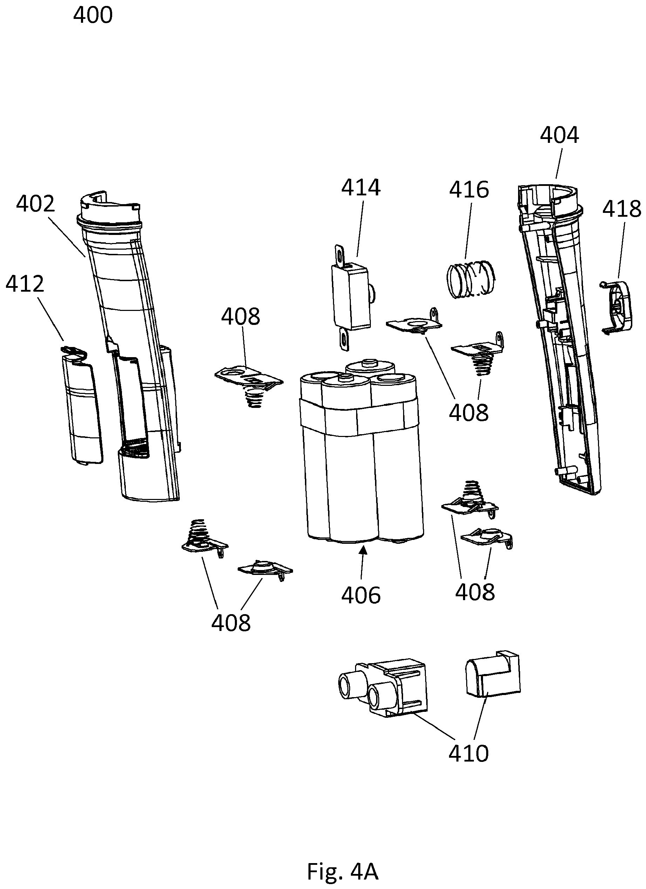

Turning next to exemplary Figure 4A, Figure 4A depicts an exemplary embodiment of a portable electric rotary slicer handle assembly 400, shown in an exploded view. According to an exemplary embodiment, a rotary slicer handle assembly 100 may be formed from two handle halves, specifically a left half 402 and a right half 404, which may mate at a center line of the handle assembly 400.

In an exemplary embodiment, the handle 400 may enclose a battery pack 406, which may be linked, by a plurality of battery contacts 408, to the remaining electrical components of the handle 400 and of the rotary slicer as a whole. In an exemplary embodiment, batteries may be disposable alkaline batteries or may be rechargeable batteries, as may be desired.

According to an exemplary embodiment, the handle 400 may also include a plug 410 to which a power adapter can be connected. For example, according to an exemplary embodiment, the plug 410 may be connected to the electrical system of the handle 400 such that an electrical adapter, such as a DC adapter, may be coupled to the plug 410 and plugged into a wall. This may allow the rotary slicer to be operated in a mode in which it is powered by one or more batteries 406, such as alkaline batteries (which may be, for example, a "portable mode" in which the rotary slicer is uncoupled from a stand) and where it alternatively can be operated in a mode in which it is powered by the DC adapter through the plug 410 (which may be, for example, a "countertop mode" in which the rotary slicer is placed in a stand). According to another exemplary embodiment, a plug 410 may be designed to couple to a dedicated base station, which may function as both a stand and a power supply for the rotary slicer.

In an exemplary embodiment wherein batteries are rechargeable, the handle 400 may be configured such that the rechargeable batteries can be recharged without requiring their removal from the handle, if desired. For example, according to an exemplary embodiment, the plug 410 may be connected to the electrical system of the handle 400 such that a rechargeable battery pack 406 can be recharged from a power outlet; in an exemplary embodiment, a DC adapter may be coupled to the plug 410 and plugged into a wall in order to charge one or more rechargeable batteries of the rotary slicer. In an exemplary embodiment, a rechargeable battery pack 406 may be recharged in this fashion when the rotary slicer is not in use, or at the same time that the rotary slicer is in use, if desired.

In an exemplary embodiment, the handle 400 may have a battery cover 412, which may be provided in, for example, one of the halves 402, 404 of the handle 400. This may allow a user to replace dead batteries (for example, if disposable batteries have been used) or otherwise access the batteries of the device.

In an exemplary embodiment, the electrical system of the handle 400 may be coupled to a switch 414, which may be linked to an on-off button 418 provided on the handle 400, and which may function to turn the rotary slicer on or off, as may be desired. Said on-off button 418, or said switch 414, may be provided with a spring that may tend to restore the original position of the on-off button once it has been pressed down. In an exemplary embodiment, a switch 414 may be provided such that more than "on" and "off' functions are allowed; for example, according to an exemplary embodiment, an on-off button 418 on the handle 400 may instead be replaced with a variable resistor allowing a user to set a slicing or grinding speed for the rotary slicer.

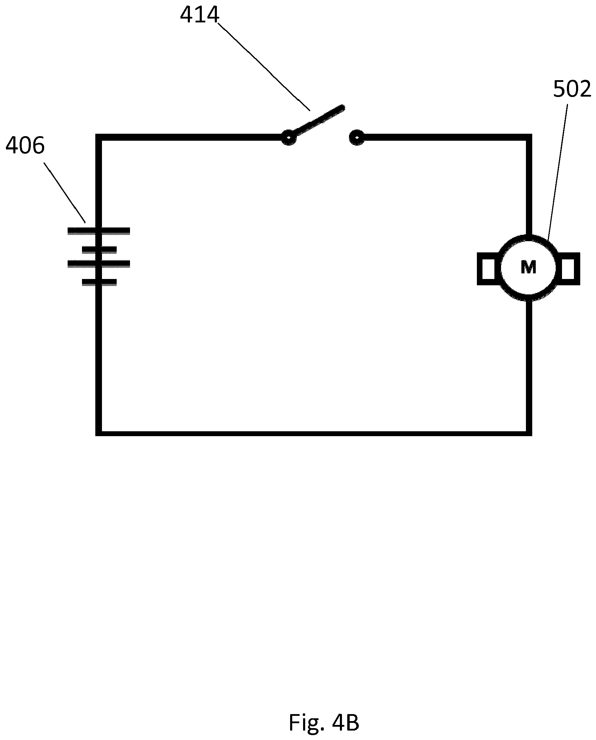

Turning now to exemplary Figure 4B, Figure 4B shows an exemplary electrical diagram for the handle 400. According to an exemplary embodiment, a power source, such as a battery pack 406, may be coupled by a switch 414 to a load, such as a motor 502. Other configurations of the electrical system of the rotary slicer may also be understood.

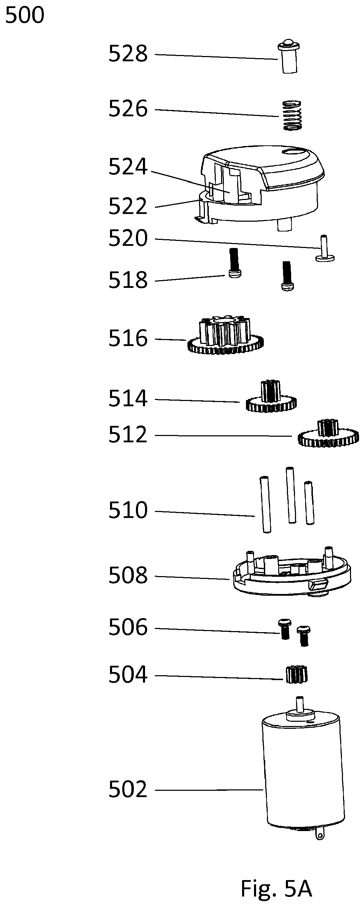

Turning now to exemplary Figure 5A, Figure 5A shows a portable electric rotary slicer motor assembly 500, shown in an exploded view. According to an exemplary embodiment, a motor assembly 500 of a rotary slicer may be provided in the handle of a rotary slicer, and may be used to cause a blade assembly of the rotary slicer to tend to spin in one direction or another.

According to an exemplary embodiment, a motor assembly 500 of a rotary slicer may be based around a motor 502, which may be coupled to an electrical system of the handle of the rotary slicer. The motor 502 may be coupled to a spur gear 504, which may in turn be meshed with other gears in order to provide angular momentum to said gears.

A motor 502 may be coupled, for example by one or more machine screws 506 or other couplings, to a gear base 508. In an exemplary embodiment, the gear base 508 may have a plurality of screw holes by which it can be mounted to the motor 502. The gear base 508 may further have one or more holes on one side of the gear base 508 in which one or more gear posts 510 may be set. One or more reduction gears, such as stepped reduction gears 512, 514, 516, may be set on the one or more gear posts 510, and may serve to reduce the high-rpm low-torque output of the motor to a low-RPM high-torque output more optimal for slicing, grating, grinding, and the like. (For example, according to an exemplary embodiment, a final torque output of 4.5 Nm or greater may be produced.)

According to an exemplary embodiment, a peg portion of a handle 522 may be provided with an opening 524 on a flattened side of the peg portion 524 such that a gear, such as gear 516, or a portion of a gear may fit through the opening 524. This gear 516 may then be meshed with a gear of a blade holder, such as a ring gear extending all of the way around the blade holder. According to an exemplary embodiment, a peg portion 522 may thus be used to transmit angular momentum from the motor 502 to the blade holder, rotating a blade. The peg portion 522 may be coupled to a handle by one or more screws 518 or other fasteners.

According to an exemplary embodiment, a peg portion of the handle 522 may further include a locking peg 528 or other locking mechanism which is intended to lock the blade holder in place when the blade holder is set on top of the peg portion of the handle 522. For example, according to an exemplary embodiment, a locking peg 528 may be a peg that is connected to a spring 526, which tends to drive the locking peg 528 upward. The spring 526, in turn, may be secured in place by a post 520, which may be disposed on the underside of the peg portion of the handle 522 and extend upward into the peg portion of the handle 522. In an exemplary embodiment, the post 520 may also prevent the locking peg 528 from being driven down too far into the peg portion of the handle 522, if desired.

According to an exemplary embodiment, a blade holder may be secured to the handle, and specifically to the peg portion of the handle 522, by a twist locking mechanism. For example, according to an exemplary embodiment, a user may align a blade holder with a peg portion of the handle 522 in an alignment different from the final intended alignment of the blade holder (for example, so that the blade holder is disposed at 90 degrees, 180 degrees, or 270 degrees from its final intended alignment), and may press the blade holder down onto the peg portion of the handle 522 in this initial alignment. The user may then twist the blade holder on the peg portion of the handle 522, in order to engage a twist locking mechanism of the peg portion of the handle 522 and thereby secure the blade holder onto the peg portion of the handle 522.

When the user secures the blade holder to the peg portion of the handle 522 in this manner, and specifically when the user presses the blade holder onto the peg portion of the handle 522 before twisting it, a flat portion of the blade holder may push down on the locking peg 528, allowing the blade holder to be easily turned with respect to the locking peg 528. Then, when the user turns the blade holder to secure it, the locking peg 528 may be aligned with a hole in the bottom portion of the blade holder, and may be driven into the hole in the bottom portion of the blade holder by the spring 526, securing the blade holder in place. This will make it more difficult to disengage the blade holder from the peg portion of the handle 522, ensuring that the peg portion of the handle 522 cannot be easily disengaged by a random twisting motion, and that the user must apply some force in order to disengage the blade holder from the locking peg.

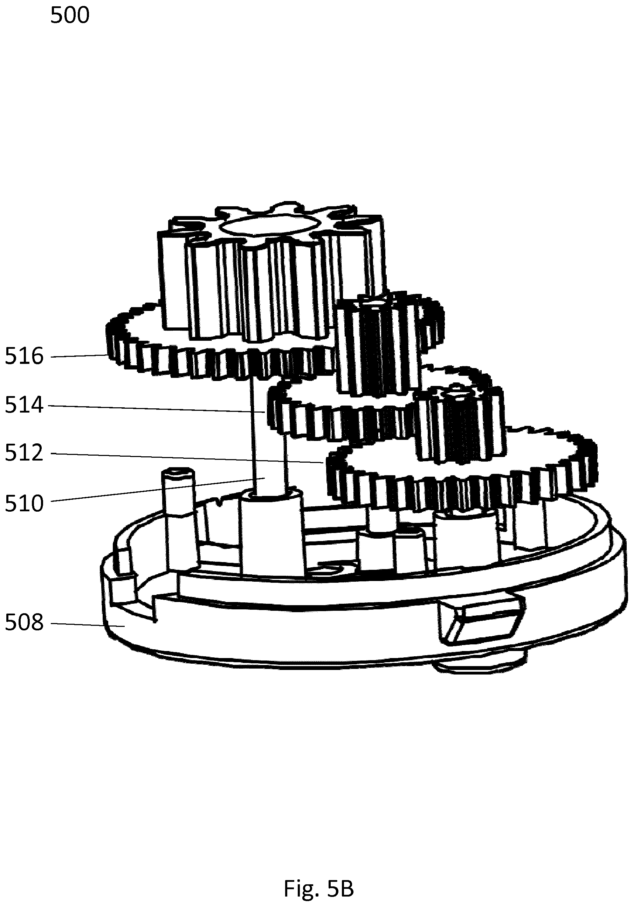

Turning now to exemplary Figure 5B, Figure 5B may show a more detailed view of the gearbox portion of the motor assembly, showing the gears of the gearbox in an intermediate state of being placed on the gear posts 510 of the gear base 508. According to an exemplary embodiment, the gear base 508 may have one or more holes on one side of the gear base 508 in which one or more gear posts 510 may be set, such as is depicted in Figure 5B. One or more reduction gears, such as gears 512, 514, 516, may be set on the one or more gear posts 510, and may serve to reduce the high-rpm low-torque output of the motor to a low-RPM high-torque output more optimal for slicing, grating, grinding, and the like.

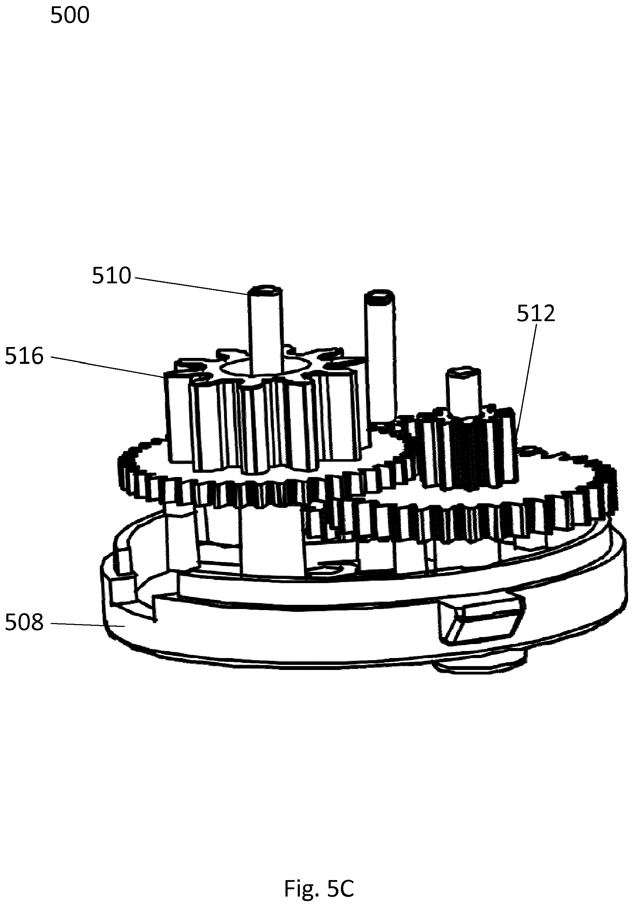

Turning now to exemplary Figure 5C, Figure 5C may show a more detailed view of the gearbox portion of the motor assembly, showing the gears of the gearbox as fully disposed on the gear posts 510 of the gear base 508. The gears 512, 514, 516 may be arranged in a chain, such that gear 514 is located at a lowest point and is driven directly by the motor, gear 512 is linked to and driven by the gear 514, and gear 516 is linked to and driven by the gear 512. Gear 516 may then function as the output gear for the gearbox.

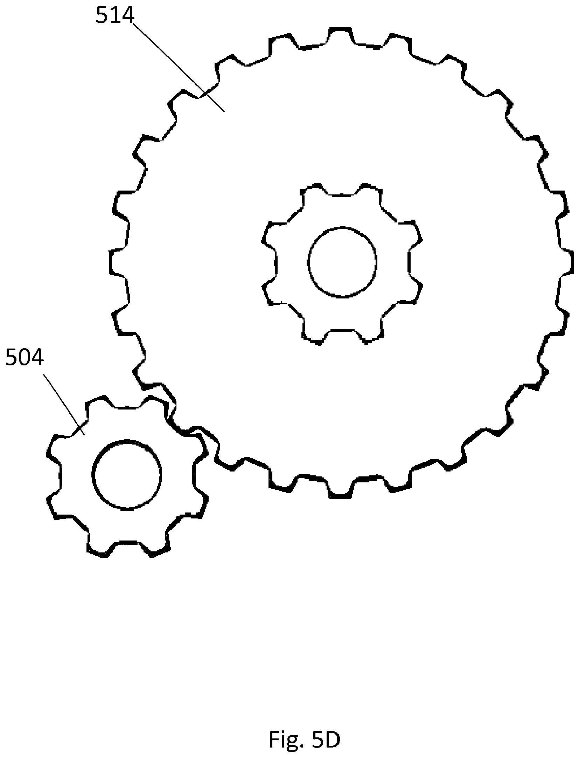

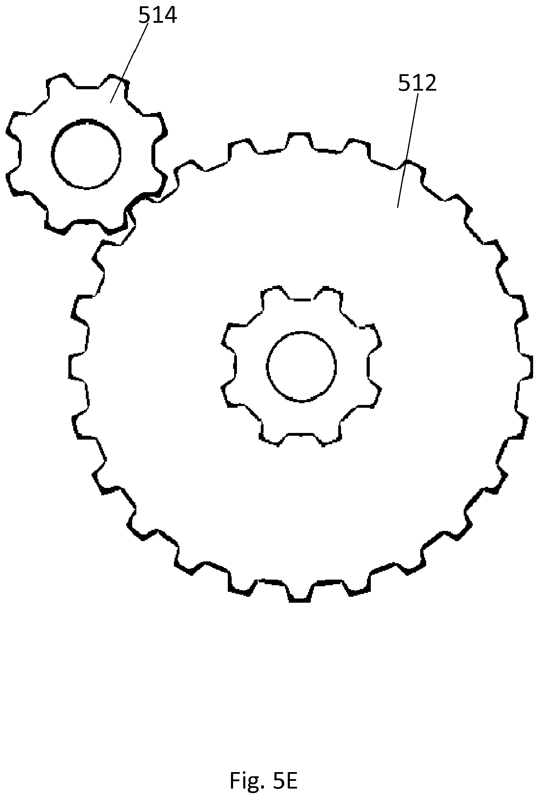

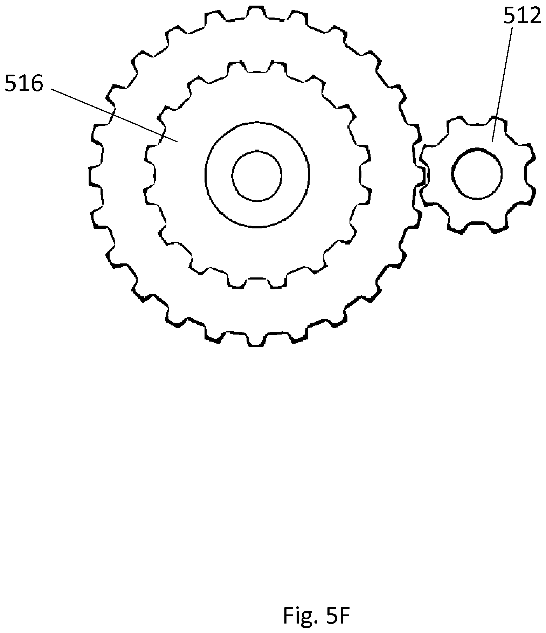

Turning now to exemplary Figures 5D, 5E, and 5F, each of the gear interactions may be shown. Looking first at exemplary Figure 5D, Figure 5D shows that the lower portion of gear 514 (which may be a stepped gear having a lower portion and an upper portion) may be driven by a spur gear 504. Figure 5E shows that the upper portion of gear 514 may be used to drive the lower portion of gear 512. Finally, Figure 5F shows that the upper portion of gear 512 may be used to drive the lower portion of gear 516.

It may be understood that variations of the above gear mechanism, for example gear mechanisms having different gear ratios, may be used instead. Likewise, different gear mechanisms may also be used, if desired.

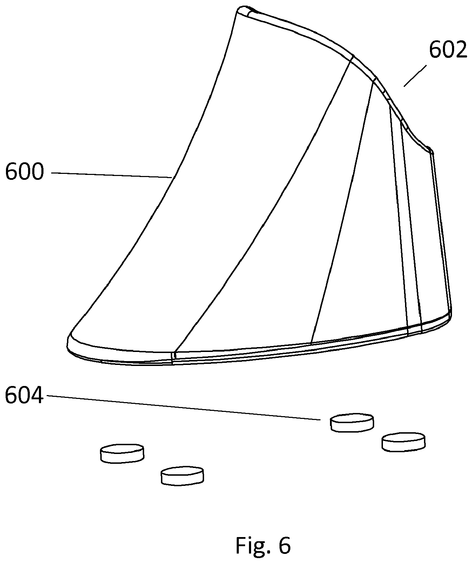

Turning next to exemplary Figure 6, Figure 6 may show an exemplary embodiment of a stand 600. According to an exemplary embodiment, a stand 600 may be coupled to a handle by inserting the handle into an opening 602 on the top portion of the stand 600. In an exemplary embodiment, one or more grips 604 may be provided on the underside of the stand 600 to prevent slippage when the stand 600 is in use.

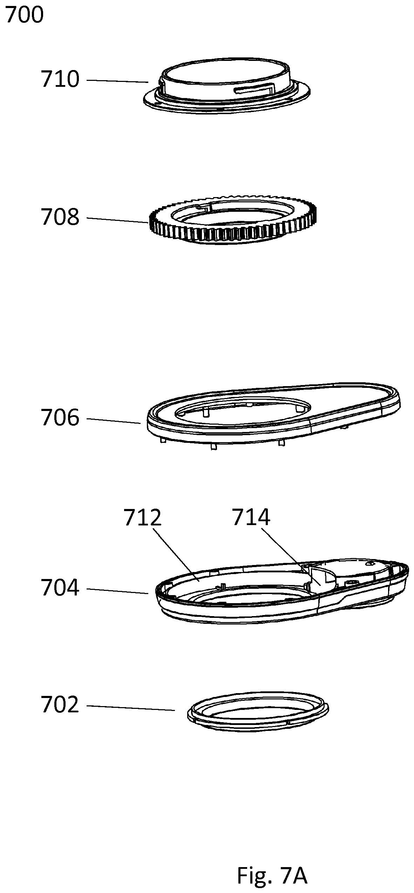

Turning next to exemplary Figure 7A, Figure 7A may show an exemplary embodiment of a blade holder 700, shown in an exploded view. According to an exemplary embodiment, a blade holder 700 may have a top plate 706 and a bottom plate 704, which may be coupled to one another to form the body of the blade holder. The bottom plate 704 may have a channel 712 in which a ring gear 708 may be disposed, and may have an opening 714 through which a gear of the peg portion of a handle may be coupled to the ring gear. The blade holder 700 may also have a lower rim portion 702 and an upper rim portion 710, which may be coupled, respectively, to a lower rim of a hole of the bottom plate 704 and to an upper rim of a hole of the top plate 706. In an exemplary embodiment, the upper rim portion 710 may have a locking mechanism, such as a twist-and-lock mechanism or other such locking mechanism, disposed on it such that a safety cylinder or other component may be coupled to it.

According to an exemplary embodiment, the use of a ring gear, such as ring gear 708, to drive a blade assembly may offer numerous advantages. In particular, the use of the ring gear 708 to drive the blade assembly may result in far higher levels of torque being applied to the blade assembly than would be the case if a shaft were instead used to drive the blade assembly. Likewise, the use of a ring gear 708 may improve the water resistance characteristics or waterproof nature of the rotary slicer, such as may be desired.

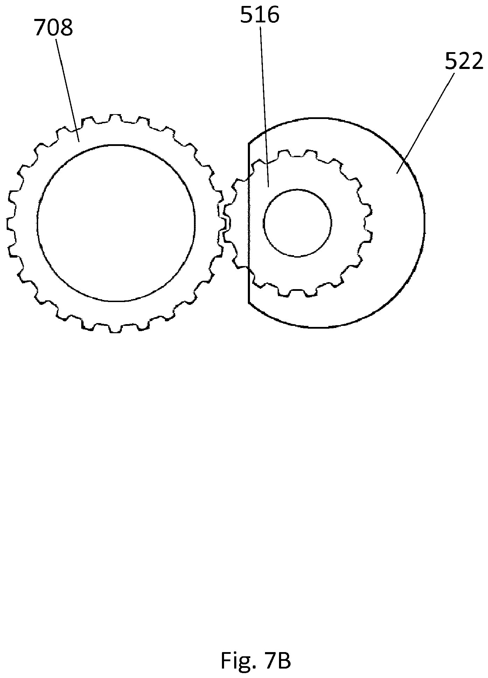

Turning next to exemplary Figure 7B, Figure 7B may show an exemplary embodiment of a plurality of gears in the portable electric rotary slicer, at the interface between the blade holder and the handle. In particular, an output gear 516 of the handle may be disposed through a peg portion 522 of the handle, and may interface with a ring gear 708 when the blade holder is disposed on the handle.

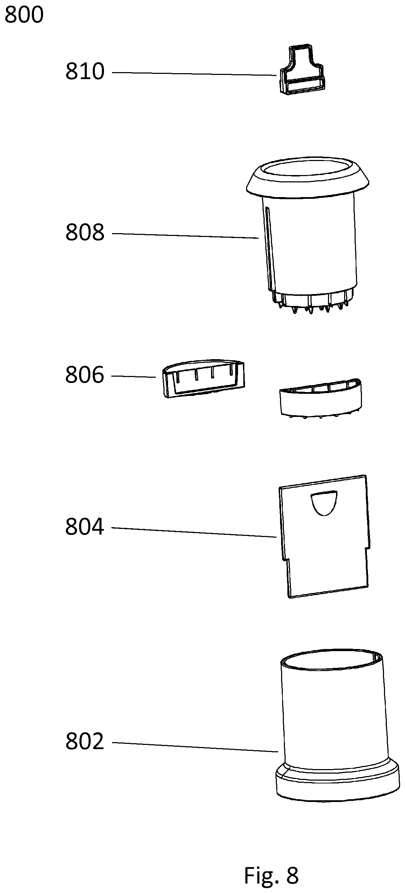

Turning next to exemplary Figure 8, Figure 8 may show an exemplary embodiment of the pusher components 800 of a rotary slicer. According to an exemplary embodiment, a rotary slicer may have, as pusher components, a safety cylinder 802, a divider 804, 806, a pusher 808, and a pusher structural support 810.

According to an exemplary embodiment, a safety cylinder 802 may be coupled to a top portion of a blade holder, for example by a twist-and-lock coupling, a press fit, or another such coupling as may be desired. In an exemplary embodiment, a safety cylinder 802 may be removed, for example for cleaning, or may be fixed as may be desired. The safety cylinder 802 may then accommodate a divider 804, 806 and a pusher 808, as may be desired.

In an exemplary embodiment, a divider 804, 806 may be formed from multiple pieces. For example, according to an exemplary embodiment, a divider may be formed by placing a panel 804 between two halves of a divider guide 806, and coupling the halves of the divider guide 806 together on either side of the panel 804. The divider 804, 806 may then be placed in the safety cylinder 802, if desired, such that the divider guide 806 protrudes slightly from the top of the safety cylinder 802 and such that the panel 804 is disposed within the safety cylinder. Pusher 808 may then be inserted into the divider 804, 806 or into the safety cylinder 802 if there is no divider 804, 806, as may be desired.

In some exemplary embodiments, it may be desirable to construct a pusher 808 from multiple elements, or to include a separate pusher structural support 810 in the pusher, if desired. For example, according to an exemplary embodiment, a pusher structural support 810 may be inserted into the top of the pusher 808, and may be used to help prevent deformation of the pusher. 808. Alternatively, if desired, the pusher 808 may be constructed from a sufficiently rigid material that deformation is of less concern, and in such embodiments no separate structural elements may be provided, if desired.

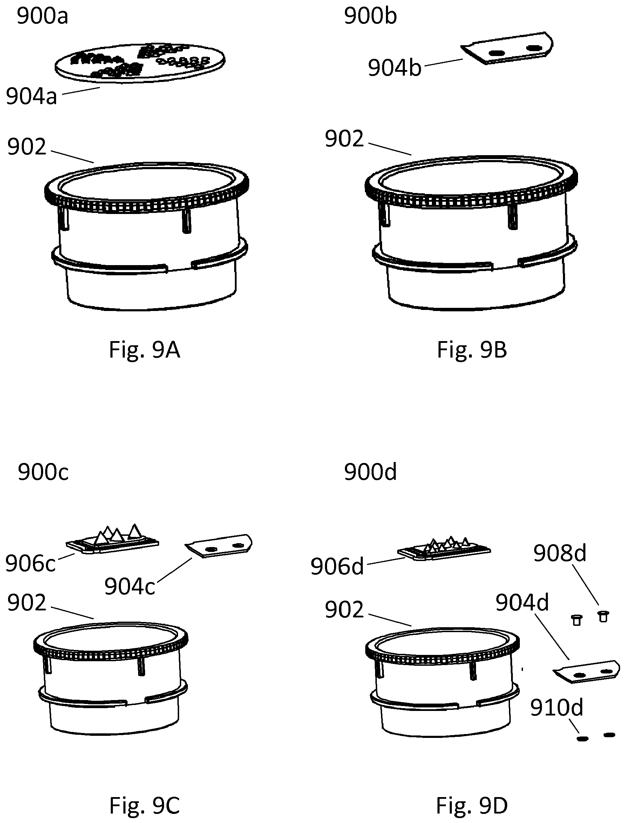

Turning next to exemplary Figures 9A to 9D, Figures 9A to 9D show exemplary embodiments of portable electric rotary slicer blade assemblies 900a, 900b, 900c, 900d, shown in exploded views.

According to an exemplary embodiment, each blade assembly 900a, 900b, 900c, 900d may make use of a similar blade carriage 902, in which one or more blades may be disposed. According to one exemplary embodiment, a blade disposed in a blade carriage 902 may be a circular blade 904a having one or more holes formed therein, which may be, for example, placed inside the top of the blade carriage 902 and secured therein. According to another exemplary embodiment, a blade disposed in a blade carriage 902 may be, for example, a razor blade 904b, 904c, 904d configured to extend from a center portion of the blade carriage 902 to an inner wall of the blade carriage 902, which may facilitate slicing using the blade assembly 900b, 900c, 900d. In some exemplary embodiments, the blade assembly 900c, 900d may also include one or more panels having one or more protrusions formed thereon, such as panels 906c, 906d. According to an exemplary embodiment, panels may have tall or short protrusions, such as may be desired.

In an exemplary embodiment, one or more of the blades may be coupled to the blade carriage 902 by one or more fasteners, such as one or more bolts 908d and one or more nuts 910d. Other fasteners may also be used, as may be desired. In other exemplary embodiments, a blade carriage 902 may be formed from multiple parts and a blade or similar structure may be held in place by the structure of the blade carriage 902; for example, according to an exemplary embodiment, a blade carriage 902 may have a top potion and a bottom portion, which may be coupled to one another so as to sandwich a set of protrusions between them, such that the set of protrusions sticks out through holes in the top portion of the blade carriage 902.

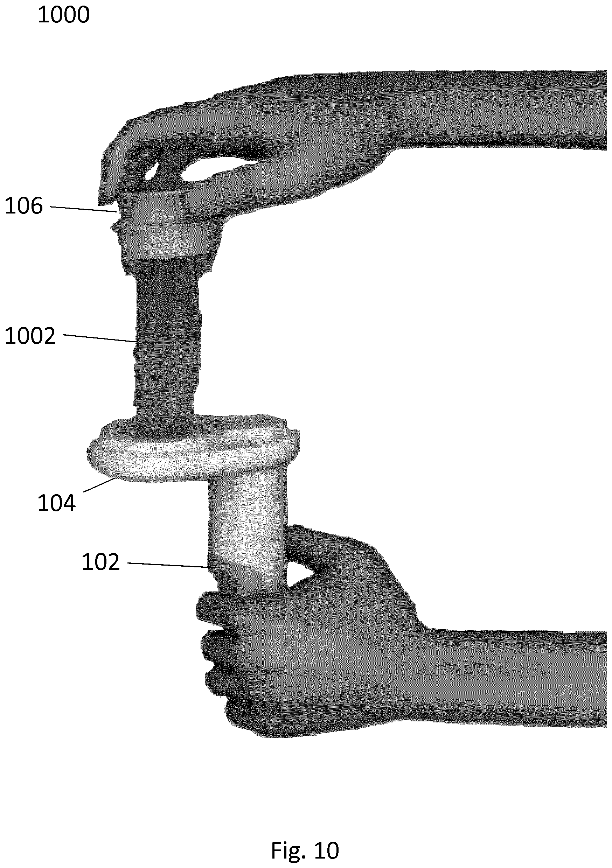

Turning next to exemplary Figure 10, Figure 10 shows an exemplary embodiment of a rotary slicer 1000 in use. According to an exemplary embodiment, a handle 102, blade holder 104, and pusher 106 may be assembled, and a foodstuff positioned between the pusher 106 and the blades of a blade holder 104. According to one exemplary embodiment, the foodstuff may be speared on the pusher 106 or otherwise coupled to the pusher 106 in order to make the foodstuff easier to hold.

In order to operate the rotary slicer 1000, a user may hold the rotary slicer 1000 in an upright position by the handle 102, and may press downward on the pusher 106 in the direction of the blade holder 104. A user may then operate a switch, which may be, for example, on the handle 102, in order to turn the rotary slicer 1000 on and operate the blades of the blade holder 104. This may then slice, grate, grind, or otherwise process the foodstuff, dispensing it from the lower part of the blade holder 104.

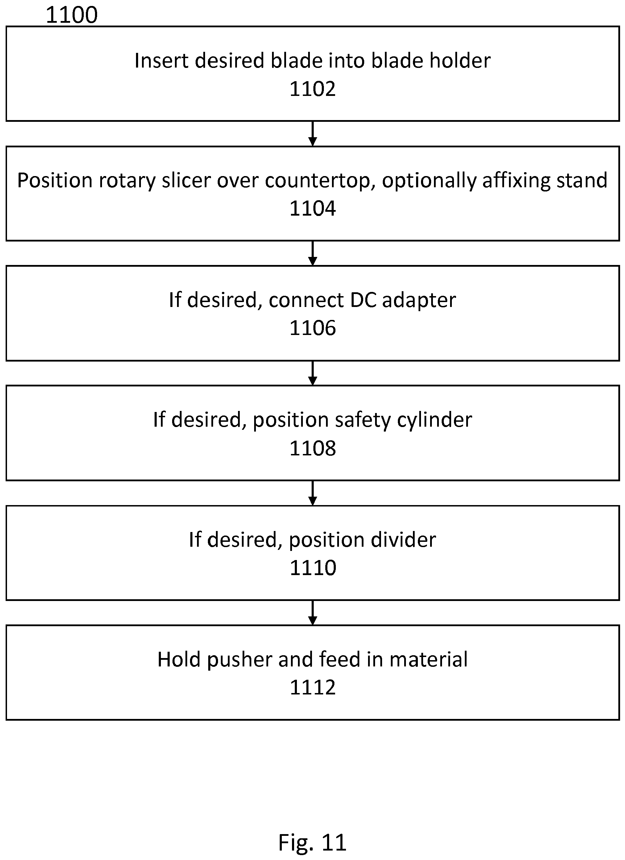

Turning next to exemplary Figure 11, Figure 11 shows an exemplary embodiment of a method for using a rotary slicer 1100. In a first step, the rotary slicer may be assembled, and a desired blade may be inserted into the blade holder 1102. In a next step, the rotary slicer may be positioned on a flat surface, such as a countertop 1104; optionally, a stand may be affixed to the rotary slicer, or the rotary slicer may be placed in a stand, in order to provide increased stability to the rotary slicer.

A user may then perform any of several optional steps. For example, according to an exemplary embodiment, a user may connect a DC adapter (or other charging cord) to the rotary slicer 1106. A user may position a safety cylinder 1108 on top of the rotary slicer if none has been provided already. A user may position a divider 1110 on top of the rotary slicer, such as on top of the safety cylinder, if none has been provided already.

A user may then hold the pusher and feed material into the blade of the blade holder 1112. In some embodiments, such as when there is no safety cylinder, the user may push foodstuffs directly into the blades of the blade holder 1112. In other exemplary embodiments, such as when there is a safety cylinder, a user may push foodstuffs through the passages in the safety cylinder created by the divider and into the blades of the blade holder. This may then cause the blade holder to dispense the sliced, grated, grounded, or otherwise processed material from the lower part of the blade holder.

The rotary slicer may also be operated in other ways, as may be desired. For example, the blade holder may be functional as a manual vegetable slicer or grate if the motor housing is not used, if it is desired to use the blade holder in this manner.

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art (for example, features associated with certain configurations of the invention may instead be associated with any other configurations of the invention, as desired).

Therefore, the above-described embodiments should be regarded as illustrative rather than restrictive. Accordingly, it should be appreciated that variations to those embodiments can be made by those skilled in the art without departing from the scope of the invention as defined by the following claims.

## Claims

1. A portable electric rotary slicer, comprising:
a handle, the handle comprising a handle housing, the handle housing having a battery cover coupled to and detachable from the housing and a switch cover disposed in the housing; the handle further comprising a power source, the power source comprising at least one battery accessible from the battery cover and further comprising a plug adapted to be coupled to a DC adapter; the handle further comprising a switch disposed under the switch cover;
the handle further comprising a motor assembly, the motor assembly comprising a motor, the motor coupled to a gear base having a plurality of gear posts, the plurality of gear posts having an output gear and a plurality of reduction gears mounted thereon, the motor further comprising a spur gear mounted on the motor shaft, the spur gear operatively linked in a gear train to the plurality of reduction gears and the plurality of reduction gears operatively linked in a gear train to the output gear, each of the plug and the at least one battery being electrically coupled to the motor;
the handle further comprising a peg coupled to the top of the handle housing, the peg having a semicircular rear portion and a flat front portion, the flat front portion having a hole disposed therein, the output gear extending partially through the hole such that a plurality of teeth of the output gear extend from the hole and such that a majority of the output gear is held within the peg, the output gear being rotatable within the hole;
a blade holder, the blade holder comprising a blade holder hole extending through the blade holder, the blade holder comprising a top blade holder plate and a bottom blade holder plate, the bottom blade holder plate having a channel extending around the perimeter of the blade holder hole, the bottom blade holder plate further having a peg hole disposed on a lower side of the bottom blade holder plate, the peg hole being connected to the channel by an opening;
the blade holder further comprising a ring gear, the ring gear disposed within the channel of the bottom blade holder plate such that the ring gear is concentric with the blade holder hole, the ring gear being positioned so that one or more teeth of the ring gear are disposed within the opening;
the blade holder further comprising a top rim portion disposed around a top rim of the blade holder hole and a bottom rim portion disposed around a bottom rim of the blade holder hole, the top rim portion having a top rim connector;
a blade assembly, the blade assembly comprising a blade carriage and a blade disposed horizontally within the blade carriage, the blade carriage sized to fit within the blade holder hole and adapted to be coupled to the ring gear by a ring gear connector; and
a pusher, the pusher comprising a pusher handle and a pushing surface.

2. The portable electric rotary slicer of claim 1, wherein the blade holder further comprises a safety cylinder, the safety cylinder having a hollow cylindrical body having a hole disposed at a top end and a bottom end, the bottom end of the cylinder having a safety cylinder connector configured to interface with the top rim connector; and
wherein the pusher further comprises an extended pushing surface adapted to fit within the safety cylinder, and wherein the pusher has a height dimension equal to or greater than a height dimension of the safety cylinder.

3. The portable electric rotary slicer of claim 1, wherein the pusher further comprises a plurality of prongs disposed on the pushing surface of the pusher.

4. The portable electric rotary slicer of claim 1, wherein the blade of the blade assembly comprises a flat blade having a plurality of raised edges facing in an outward direction.

5. The portable electric rotary slicer of claim 1, wherein the blade assembly further comprises a plurality of protrusions disposed within the blade carriage, each protrusion having a point oriented in an outward direction.

6. The portable electric rotary slicer of claim 1, further comprising a portable stand, the stand having a flat lower surface with one or more grips disposed thereon, the stand further having a stand hole having an opening disposed on a top portion of the stand; and
wherein the handle is placed within the hole of the stand.

7. The portable electric rotary slicer of claim 1, further comprising a divider, the divider comprising a divider panel and a divider guide, the divider panel having a height dimension equal to the height dimension of the safety cylinder and a width dimension equal to an inner diameter of the safety cylinder, the divider panel adapted to fit within the safety cylinder;
wherein the divider guide has a body portion having a diameter equal to the inner diameter of the safety cylinder and an upper lip having a diameter greater than the inner diameter of the safety cylinder.

8. A method of using a portable electric rotary slicer, the portable electric rotary slicer comprising:
a handle, the handle comprising a handle housing, the handle housing having a battery cover coupled to and detachable from the housing and a switch cover disposed in the housing; the handle further comprising a power source, the power source comprising at least one battery accessible from the battery cover and further comprising a plug adapted to be coupled to a DC adapter; the handle further comprising a switch disposed under the switch cover;
the handle further comprising a motor assembly, the motor assembly comprising a motor, the motor coupled to a gear base having a plurality of gear posts, the plurality of gear posts having an output gear and a plurality of reduction gears mounted thereon, the motor further comprising a spur gear mounted on the motor shaft, the spur gear operatively linked in a gear train to the plurality of reduction gears and the plurality of reduction gears operatively linked in a gear train to the output gear, each of the plug and the at least one battery being electrically coupled to the motor;
the handle further comprising a peg coupled to the top of the handle housing, the peg having a semicircular rear portion and a flat front portion, the flat front portion having a hole disposed therein, the output gear extending partially through the hole such that a plurality of teeth of the output gear extend from the hole and such that a majority of the output gear is held within the peg, the output gear being rotatable within the hole;
a blade holder, the blade holder comprising a blade holder hole extending through the blade holder, the blade holder comprising a top blade holder plate and a bottom blade holder plate, the bottom blade holder plate having a channel extending around the perimeter of the blade holder hole, the bottom blade holder plate further having a peg hole disposed on a lower side of the bottom blade holder plate, the peg hole being connected to the channel by an opening;
the blade holder further comprising a ring gear, the ring gear disposed within the channel of the bottom blade holder plate such that the ring gear is concentric with the blade holder hole, the ring gear being positioned so that one or more teeth of the ring gear are disposed within the opening;
the blade holder further comprising a top rim portion disposed around a top rim of the blade holder hole and a bottom rim portion disposed around a bottom rim of the blade holder hole, the top rim portion having a top rim connector;
a blade assembly, the blade assembly comprising a blade carriage and a blade disposed horizontally within the blade carriage, the blade carriage sized to fit within the blade holder hole and adapted to be coupled to the ring gear by a ring gear connector; and
a pusher, the pusher comprising a pusher handle and a pushing surface;
wherein the method comprises:
inserting the blade assembly into the blade holder;
positioning the rotary slicer on a flat surface;
placing material directly above the blade assembly and under the pusher;
activating the switch of the rotary slicer by pressing the switch cover; and
pressing downward with the pusher.
